## Europäisches Patentamt

## European Patent Office

## Office européen des brevets

(11) Veröffentlichungsnummer: **0 335 132**
**A1**

(12) **EUROPÄISCHE PATENTANMELDUNG**

(21) Anmeldenummer: **89103843.2**

(22) Anmeldetag: **04.03.89**

(51) Int. Cl.⁴: **F42C 13/02 , G01S 17/02**

(30) Priorität: **31.03.88 CH 1226/88**

(43) Veröffentlichungstag der Anmeldung:
**04.10.89 Patentblatt 89/40**

(84) Benannte Vertragsstaaten:
**BE CH DE FR GB IT LI NL SE**

(71) Anmelder: **Werkzeugmaschinenfabrik Oerlikon-Bührle AG**
**Birchstrasse 155**
**CH-8050 Zürich(CH)**

(72) Erfinder: **De Coi, Beat**
**Ringstrasse 23**
**CH-7302 Landquart(DE)**

(54) **Optischer Abstandszuender.**

(57) Ein optischer Abstandszünder, der das zugehörige Geschoss im gewünschten Abstand vor dem Ziel zur Detonation bringen soll, ist sehr empfindlich auf Störeinflüsse, beispielsweise auf Regentropfen, welche ein Ziel vortäuschen, das gar nicht vorhanden ist. Um die Wahrscheinlichkeit, dass der Abstandszünder auf Regentropfen in unerwünschter Weise anspricht, möglichst klein zu halten, sind erfindungsgemäss - zur Verminderung der Gefahr einer vorzeitigen Zündung des Geschosses durch Störeinflüsse -mindestens zwei optische Sender und zu jedem Sender ein optischer Empfänger angeordnet. Mit beiden Empfängern wird der Zielabstand in mehreren zeitlich aufeinanderfolgenden Messungen gleichzeitig gemessen. Eine Zündung erfolgt nur, wenn beide Empfänger gleichzeitig ansprechen.

FIG. 2

## Optischer Abstandszünder

Die Erfindung betrifft einen optischen Abstandszünder zum Zünden eines Geschosses bei einem gegebenen Abstand vor dem Ziel, enthaltend einen optischen Sender und einen optischen Empfänger, auf den der vom Sender ausgesandte, im Ziel reflektierte Strahl auftrifft und der beim Empfang des reflektierten Strahles ein Signal zum Zünden des Geschosses abgibt.

Solche Abstandszünder sind bekannt. Es wird insbesondere auf die DE-A-34 29 943 und DE-A-29 49 521 hingewiesen. Diese bekannten Abstandszünder weisen Mittel auf, um Störeinflüsse durch Streulicht oder Rauschen auszuschalten. Neben den Störeinflüssen durch Streulicht und Rauschen, insbesondere Sonnenlicht, gibt es aber noch andere Störeinflüsse, welche sich durch diese bekannten Mittel nicht ausschalten lassen, z.B. Festkörper in der Luft oder Regentropfen, welche den ausgesandten Strahl reflektieren und ein Ziel vortäuschen, das gar nicht vorhanden ist.

Die Aufgabe, welche mit der vorliegenden Erfindung gelöst werden soll, besteht in der Schaffung eines Abstandszünders, bei welchem die Wahrscheinlichkeit, dass er auf Regentropfen oder kleinere Festkörper anspricht, möglichst klein ist.

Erfindungsgemäss wird diese Aufgabe dadurch gelöst, dass zur Verminderung der Gefahr einer vorzeitigen Zündung des Geschosses durch Störeinflüsse, mindestens zwei optische Sender und zu jedem Sender ein optischer Empfänger angeordnet sind, dass mit beiden Empfängern der Zielabstand in mehreren zeitlich aufeinanderfolgenden Messungen gleichzeitig gemessen wird und dass eine Zündung nur erfolgt, wenn beide Empfänger gleichzeitig ansprechen.

Ein Ausführungsbeispiel des erfindungsgemässen Abstandszünders ist im folgenden anhand der beigefügten Zeichnung ausführlich beschrieben. Es zeigt:

Fig.1 einen Längsschnitt durch einen Abstandszünder, der auf einen Minenwerferzünder aufgesetzt ist,

Fig.2 eine perspektivische Darstellung des Strahlenganges,

Fig.3 und 4 eine schematische Darstellung des Strahlenganges im Grund- und Seitenriss und

Fig.5 ein Blockschaltbild des Abstandszünders.

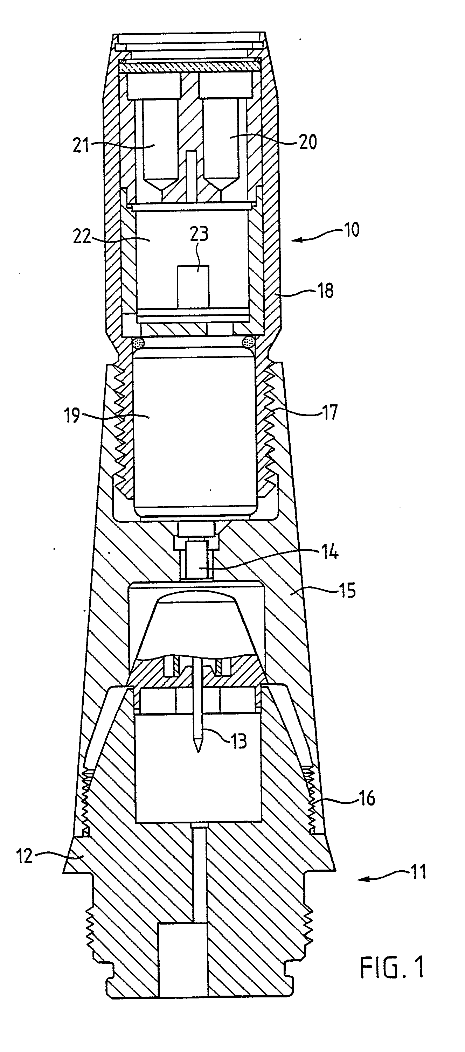

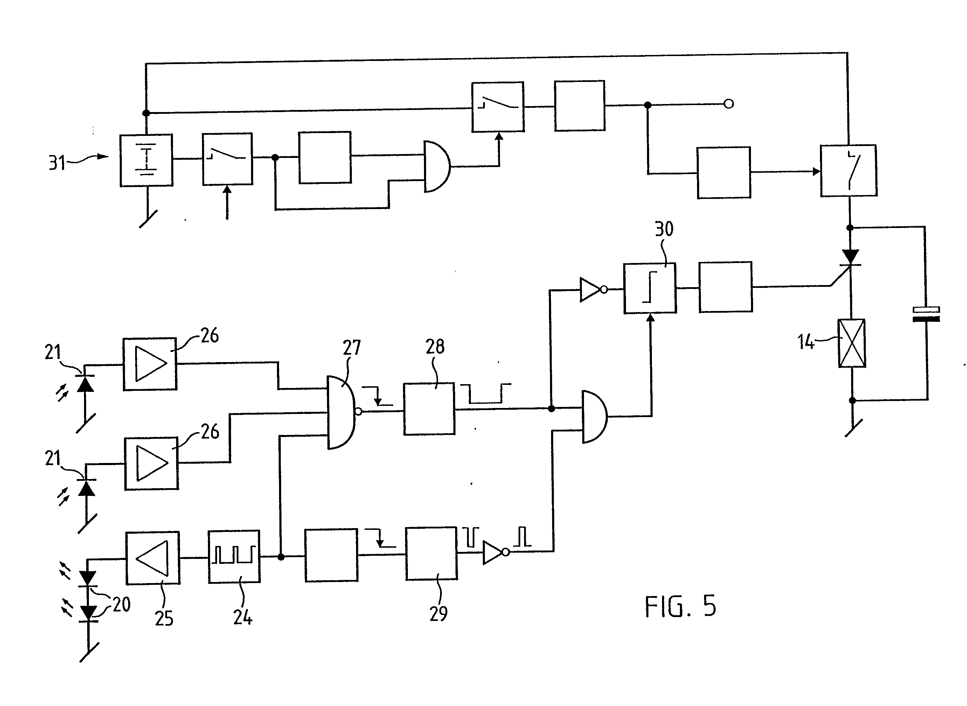

Gemäss Fig.1 ist ein Abstandszünder 10 auf einen Minenwerferzünder 11 aufgeschraubt. Der Minenwerferzünder 11 weist ein Gehäuse 12 auf, das auf eine nicht dargestellte Mine aufgeschraubt ist. Von diesem Zünder 11 ist lediglich ein Zündstift 13 dargestellt, der zum Anstechen einer nicht dargestellten Zündpille dient. Falls der Abstandszünder 10 nicht auf den Minenwerferzünder 11 aufgeschraubt ist, wird dieser Zündstift 13 beim Aufprall der Mine im Ziel zurückgestossen und kann die genannte Zündpille anstechen. Falls der Abstandszünder 10 aufgeschraubt ist, wird der Zündstift 13 durch eine Gasdruck erzeugende Kapsel 14 betätigt, sobald sich das Geschoss im gewünschten Abstand vom Ziel befindet. Diese Kapsel 14 befindet sich in einem Zwischenstück 15, welches hinten mit Hilfe eines Gewindes 16 an das Gehäuse 12 des Minenwerferzünders 11 und vorne mit einem Gewinde 17 an ein Gehäuse 18 des Abstandszünders 10 angeschraubt ist. Der Minenwerferzünder 11 wird als bekannt vorausgesetzt und ist daher hier nicht näher beschrieben. Im Gehäuse 18 des Abstandszünders 10 befindet sich hinten eine Batterie 19, mit der unter anderem die Kapsel 14 gezündet werden kann. Ferner befinden sich vorne im Gehäuse 18 zwei Sender 20 und zwei Empfänger 21. Die beiden Sender 20 und auch die beiden Empfänger 21 sind hintereinander angeordnet, sodass in Fig.1 nur jeweils ein Sender 20 und ein Empfänger 21 zu sehen sind. Zwischen den beiden Sendern 20 und den beiden Empfängern 21 einerseits und der Batterie 19 andererseits ist die elektronische Vorrichtung 22 und ein Schalter 23 angeordnet. Die Elektronik 22 ist weiter unten anhand dem in Fig.5 dargestellten Blockschaltbild ausführlich erläutert. Als Schalter 23 ist insbesondere ein Trägheitsschalter vorgesehen, der die Elektronik 22 durch die Abschussbeschleunigung beim Start der Mine oder des Geschosses einschaltet.

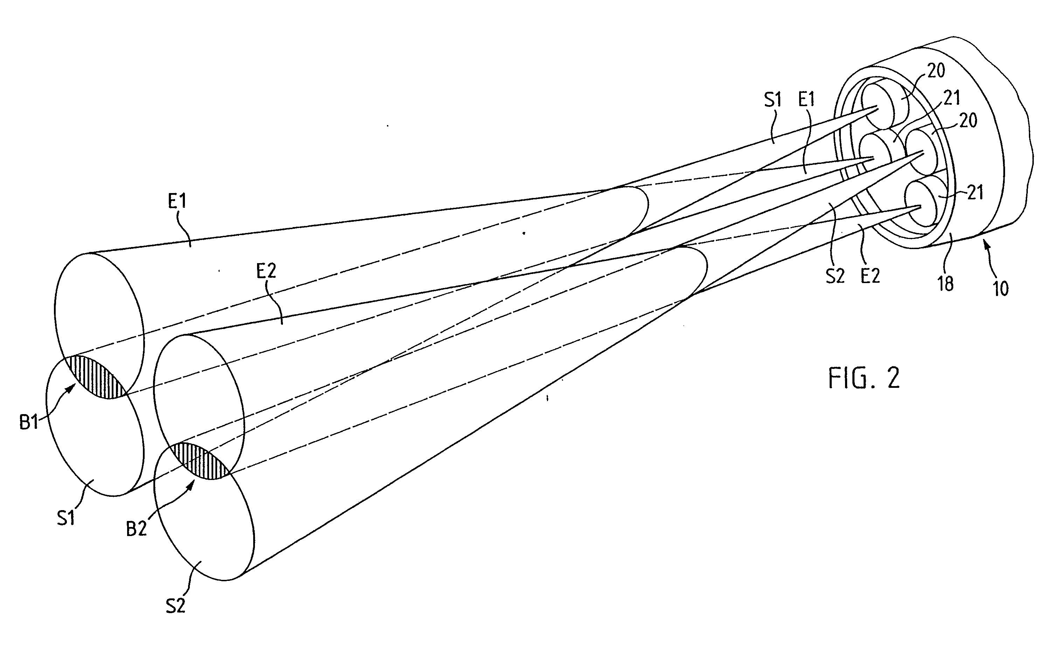

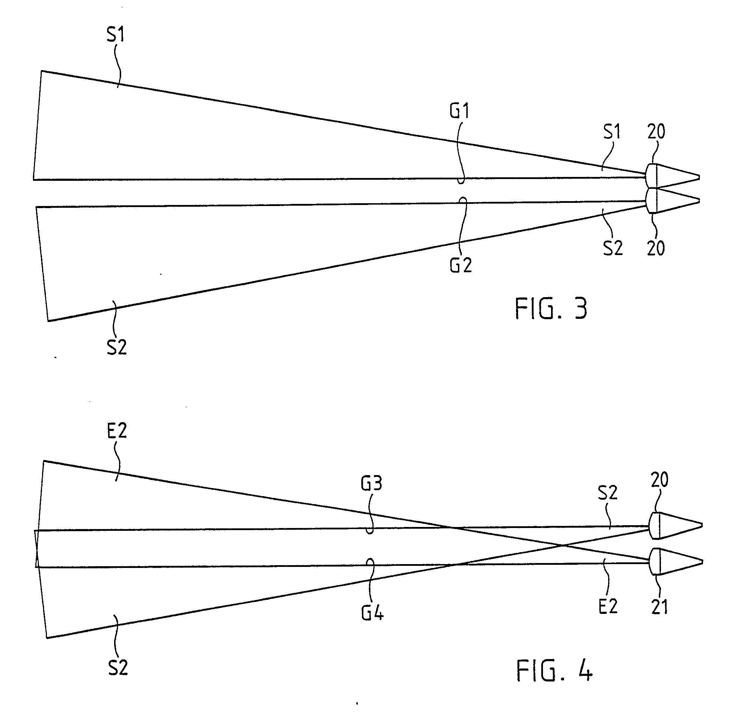

Der Aufbau und die Wirkungsweise der Sender 20 und Empfänger 21 ist anhand der Fig.2 - 4 ausführlich beschrieben. Gemäss Fig.2 senden die beiden Sender 20 je einen Lichtkegel oder kegelförmigen Lichtstrahl S1 und S2 aus. Die beiden Empfänger 21 können reflektiertes Licht erkennen, sofern es sich innerhalb der beiden Kegel E1 und E2 befindet. Die genaue Orientierung dieser vier Kegel S1, S2 und E1, E2 ist aus Fig.2 ersichtlich. Gemäss Fig.3 sind zwei erzeugende Linien oder Geraden G1 und G2 der beiden Lichtkegel S1 und S2 parallel oder annähernd parallel zueinander, ohne dass sich die beiden Lichtkegel S1 und S2 berühren oder durchdringen. Gemäss Fig.4 durchdringt der eine Lichtkegel S2 den zugehörigen Empfangskegel E2, wobei ebenfalls zwei erzeugende Linien oder Geraden G3 und G4 parallel oder annähernd parallel zueinander angeordnet sind. Ein Ziel kann nur erkannt werden, wenn es sich einerseits im Lichtkegel S1 und S2 befindet und somit vom Sender 20 angestrahlt wird, und wenn es sich zugleich im Empfangskegel E1, E2 befindet und das vom Ziel reflektierte Licht auf den Empfänger 21 gelangt. Dieser Bereich B1 bzw. B2 ist in Fig.2 schraffiert dargestellt. Die beiden Empfänger 21 sind vorzugsweise darart miteinander gekoppelt, dass das Ziel nur erkannt werden kann, wenn es sich in den beiden Bereichen B1 und B2 befindet. Dadurch wird erreicht, dass kleine Gegenstände, z.B. Regentropfen oder Splitter, die sich nur in einem Bereich B1 oder B2 befinden, nicht mit dem Ziel verwechselt werden können, d.h. sie werden nicht erkannt und sind somit auch nicht in der Lage, eine Zündung durch den Abstandszünder auszulösen.

Gemäss Fig.5 weist der Abstandszünder 10 in seiner elektronischen Vorrichtung einen Sende-Oszillator 24 auf. Dieser Sendeoszillator ist z.B. als Pulsoszillator aufgebaut. Die Pulsdauer kann z.B. 6-8 $\mu$s betragen. Die Periodendauer ist dann ca. 150 $\mu$s lang. Zwischen Oszillator 24 und den beiden Sendern 20 ist ein Verstärker 25 angeordnet. Die Pulsenergie wird in einem 10 $\mu$F Tantalkondensator gespeichert. Die beiden Empfänger 21 sind ebenfalls an je einen Verstärker 26 angeschlossen. Als Empfänger 21 werden Photodioden verwendet, die eine hohe Photoempfindlichkeit und kurze Anstiegszeit besitzen. Das Signal der in Sperrichtung betriebenen Photodioden wird wechselspannungsmässig ausgekoppelt und mit dem Verstärker 26 um ca. 80 dB verstärkt. Die beiden Empfänger 21 sind über die Verstärker 26 an ein Koinzidenztor 27 angeschlossen. Es ist ein Monoflop 28 vorhanden, das nur getriggert wird, wenn beide Verstärker 26 während der Sendezeit von 6-8 $\mu$s ein Signal von einer bestimmten Grösse, z.B. 3,4 Volt abgeben. An das Monoflop 28 ist ein Integrator 30 angeschlossen. Der Oszillator 24 ist über ein zweites Monoflop 29 ebenfalls an den Integrator 30 angeschlossen. Falls vom ersten Monoflop 28 kein Signal kommt, wird der Integrator 30 durch das zweite Monoflop 29 wieder auf 0 Volt zurückgeschaltet. Im Integrator 30 werden die Impulse des ersten Monoflops 28 aufsummiert. Erst wenn z.B. vier Impulse vom ersten Empfänger 21 und gleichzeitig vier Impulse vom zweiten Empfänger 21 im Integrator 30 aufsummiert wurden, erhält die erwähnte Gas-Kapsel 14 einen Impuls, wodurch die Zündung erfolgt und der Zündstift 13 (Fig.1) betätigt wird. Mit weiteren Organen 31, welche ein RC-Zeitglied enthalten, wird eine Vorrohrsicherheit gewährleistet.

Die Wirkungsweise des beschriebenen Abstandszünders ist wie folgt:

Durch den Abschuss des Geschosses wird auch der beschriebene Abstandszünder eingeschaltet. Die beiden Sender 20 strahlen pulsierend einen Lichtstrahl aus, wobei wie gesagt die Pulsdauer ca. 6-8 $\mu$s beträgt und die Periodendauer ca.

150 $\mu$s. Die Wellenlänge dieses Strahles liegt vorzugsweise im Infrarotbereich. Damit ein Ziel erkannt wird, sind folgende Bedingungen zu erfüllen:

a) Das Ziel muss in den beiden Bereichen B1 und B2 erscheinen (Fig.2).

b) Das Ziel muss so lange in diesen beiden Bereichen verweilen, dass es mehrere Lichtimpulse des Senders 20 auf den Empfänger 21 reflektieren kann, z.B. sollten mindestens je vier Impulse aus den beiden Bereichen B1 und B2 reflektiert werden, damit die Zündung erfolgt.

Somit ist die Wahrscheinlichkeit klein, dass in den beiden Bereichen B1, B2 gleichzeitig Regentropfen auftauchen, die in beiden Bereichen viermal zeitlich hintereinander erkannt werden können.

Ein wesentlicher Vorteil besteht darin, dass die Bereiche B1 und B2 nicht divergieren im Gegensatz zu den kegelförmigen Lichtstrahlen, sodass die Grösse der Bereiche B1, B2 von der Entfernung des Geschosses vom Ziele unabhängig ist.

Statt der beschriebenen beiden Sender 20 und der beiden Empfänger 21 können noch weitere Sender und Empfänger im Gehäuse 12 angeordnet sein.

## Ansprüche

1. Optischer Abstandszünder zum Zünden eines Geschosses, bei einem gegebenen Abstand vor dem Ziel, enthaltend einen optischen Sender (20,S) und einen optischen Empfänger (21,E), auf den der vom Sender (20) ausgesandte, im Ziel reflektierte Strahl (S1, S2, E1, E2) auftrifft und der beim Empfang des reflektierten Strahles ein Signal zum Zünden des Geschosses abgibt, dadurch gekennzeichnet, dass zur Verminderung der Gefahr einer vorzeitigen Zündung des Geschosses durch Störeinflüsse mindestens zwei optische Sender (20,S) und zu jedem Sender (20,S) ein optischer Empfänger (21,E) angeordnet sind, dass mit beiden Empfängern (21,E) der Zielabstand in mehreren zeitlich aufeinanderfolgenden Messungen gleichzeitig gemessen wird und dass eine Zündung nur erfolgt, wenn beide Empfänger (21,E) gleichzeitig ansprechen.

2. Optischer Abstandszünder nach Anspruch 1, dadurch gekennzeichnet, dass sich der vom Sender (20,S) erzeugte Lichtkegel (S1, S2) und der Empfangskegel (E1, E2), in welchem der Empfänger (21,E) das vom Ziel reflektierte Licht erkennt, sich nur in einem Bereich (B1, B2) überdecken, in welchem das Ziel vom Empfänger (21,E) erkannt werden kann.

3. Optischer Abstandszünder nach Anspruch 2, dadurch gekennzeichnet, dass der erste Sender (20,S) und der erste Empfänger (21,E) einen ersten Bereich (B1) bilden und dass der zweite Sender (20,S) und der zweite Empfänger (21,E) einen zweiten Bereich (B2) bilden, welche sich nicht überdecken und dass sich das zu erkennende Ziel in beiden Bereichen (B1, B2) befinden muss, um erkannt zu werden.

FIG. 1

FIG. 2

EP 0 335 132 A1

FIG. 3

FIG. 4

FIG. 5

EP 0 335 132 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 1, Nr. 39, 20. April 1977, Seite 2359 M 76; & JP-A-51 145 200 (BOEICHO GIJUTSUHONBU) 13-12-1976 * Zusammenfassung * --- | 1,2 | F 42 C 13/02 G 01 S 17/02 |
| A | DE-A-3 627 972 (I.F.M.) * Spalte 4, Zeile 12 - Spalte 6, Zeile 26; Figur 1 * --- | 1 | |
| A | US-A-4 306 500 (CASTANIEN) * Spalte 2, Zeile 66 - Spalte 4, Zeile 26; Figuren * --- | 1-3 | |
| A | US-A-3 749 918 (JONES) * Spalten 2,3; Figur 1 * --- | 1-3 | |
| A | US-A-4 709 142 (DAHL) * Figuren * --- | 1,2 | |
| A | EP-A-0 208 050 (OERLIKON) * Figur 6 * ----- | 1 | RECHERCHIERTE SACHGEBIETE (Int. Cl.4)  F 42 C G 01 S |

Der vorliegende Recherchenbericht wurde für alle Patentansprüche erstellt

| Recherchenort | Abschlußdatum der Recherche | Prüfer |
|---|---|---|
| DEN HAAG | 03-07-1989 | DEVINE J.J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)